# EUROPEAN PATENT SPECIFICATION

(11) **EP 2 545 102 B1**
(45) Date of publication and mention of the grant of the patent: **31.12.2014**
(21) Application number: 11713198.7
(22) Date of filing: 04.03.2011
(51) Int. Cl.: C08G 73/12, C08L 79/08, B32B 33/00, C08F 8/32, C08J 3/05, C08K 9/04, C09D 5/02, C09D 125/00, D21H 21/16

(54) **A HEAT SEALABLE SUBSTRATE AND A PROCESS FOR MAKING THE SAME**
WÄRMEVERSIEGELBARES SUBSTRAT UND HERSTELLUNGSVERFAHREN DAFÜR
SUBSTRAT THERMOSCELLABLE ET SON PROCÉDÉ DE FABRICATION

(30) Priority: 09.03.2010 NL 1037792
(43) Date of publication of application: 16.01.2013
(73) Proprietor: Topchim N.V., 2160 Wommelgem (BE)
(72) Inventor: STANSSENS, Dirk, B-3530 Houthalen (BE); JÖNSSON, Eric, B-2970 Schilde (BE)
(74) Representative: Laenen, Bart Roger Albert
(86) International application number: PCT/EP2011/053306
(87) International publication number: WO 2011/110498

(56) References cited:
- WO-A1-99/45039
- WO-A1-2004/031249
- WO-A1-2008/014903
- AHOKAS M ET AL: "Synthesis of poly(styrene-co-maleimide) and poly(octadecene-co-malei mide) nanoparticles and their utilization in paper coating", PROGRESS IN ORGANIC COATINGS, ELSEVIER BV, NL LNKD- DOI:10.1016/J.PORGCOAT.2009.08.015, vol. 66, no. 4, 1 December 2009 (2009-12-01), pages 377-381, XP026703881, ISSN: 0300-9440 [retrieved on 2009-09-16]

## Description

The invention relates to a heat sealable substrate, i.e. a substrate coated with a formulation that provides heat sealable properties to the substrate treated therewith Accordingly, in a further aspect the present invention provides a coating formulation for use in the manufacture of a heat sealable substrate as well as the use of an appropriate coating formulation in obtaining a heat sealable substrate.

It is accordingly an object of the present invention to provide a process for applying a heat sealable layer to a substrate in which the substrate is provided with a formulation that provides heat sealable properties and consists of a coating composition containing a cyclic imide, which can be a maleimide, an itaconimide, a citraconimide or a 2,3 dialkyl maleimide. Preferably the coating composition is brought on the substrate from a water borne formulation in which the coating composition containing a cyclic imide is dispersed in the water phase and the coating composition containing a cyclic imide is a copolymer of cyclic imides and vinylic co-monomers, preferably a co-polymer of cyclic imides and styrene. The dispersed product in the water phase has a particle size between 20 and 500 nm, preferably between 30 and 200nm, and the particles have a core-shell structure.

A heat sealable substrate is normally composed of one or more basic layers and a coating layer having heat sealable characteristics. The substrates can then be sealed to each other or to other substrates just by heating the heat sealable layer and by putting some pressure on the substrates. Alternatively, the substrates have to be treated by a glue. However, this is a more cumbersome process as the glue needs to be applied or even be dried just before the substrates are attached to each other. The use of heat sealable substrates is especially favorable in high speed applications where many articles need to be sealed in a very short time. This is the case for instance in food applications whereby packaging material needs to be sealed once it is formed in the right shape or when the packaging material needs to be closed once it is filled.

Currently, thermoplastic materials are mostly used to create the heat sealability property. Materials such as LDPE, PP are very well suited for this. The polyolefins have the extra advantage of having good barrier properties against for instance water, which helps to protect the goods that are packed in the packaging material. The thermoplastic materials can be used on their own or they can be employed as a laminated layer on another substrate. In the latter, the thermoplastic material is extruded and through a lamination process the material is brought as tiny layer on another substrate. This can be another thermoplastic material or a non-thermoplastic material. An interesting combination is the lamination of a LDPE layer on paper or card board. Paper and card board are cheap materials and can give stiffness to the packaging material, while LDPE provides barrier properties and heat sealability. This combination is often used in food packaging such as for instance for sandwich boxes, frozen food containers, but also for liquids such as for instance in cups. For convenience reasons cups are more and more used as well for hot and cold drinks as for frozen foods. The packaging is developed for one time use applications and after its use the packaging material is considered as waste. Nowadays, there is general trend to design materials in such a way that after their life time the waste material can be up-graded to a new useful material. With packaging material consisting out of paper or card board and LDPE this is very difficult. It is hard to separate the LDPE from the paper or card board and principally the only useful application of the waste is to incinerate it in order to recuperate the energy.

It is the purpose of this invention to provide a heat sealable substrate with good water barrier properties that after its use can be easily recycled to a new material with useful properties. Furthermore, it is the purpose to be able to put hydrophobic heat sealable layers onto a substrate that are thinner than the laminated thermoplastic material in order to reduce the overall weight of the packaging material. Laminated layers through an extrusion process require a minimum thickness of often 15 gram per square meter so that no pinholes appear in the layers. Such pinholes destroy the good barrier properties of the laminated layer.

It is an object of the invention to provide a heat sealable substrate in which the above mentioned problems have been avoided.

This object is achieved in that the substrate comprises a basic layer and a coating layer containing a cyclic imide.

By the use of a cyclic imide in the coated substrate there is not only obtained a heat sealability but also water barrier properties. The cyclic imide structures are quite unique as they have a high rigidity and polarity, though they have a good hydrophobicity. The high rigidity enables the preparation of polymers with a high glass transition temperature (Tg), which makes sure that good film formation and good adhesion takes place only at elevated temperatures. A higher Tg is also beneficial for the non-sticky behavior of the applied coating. The higher the Tg of the polymer, the higher the substrate can be used without having tack. The high polarity of the cyclic imide groups is advantageous for providing good interaction with other substrates and hence good adhesion. The good hydrophobicity of the cyclic imide will make sure that a good water barrier property can be obtained.

Preferably the cyclic imide is present as part of a polymer.. These polymers can be made first and then be dissolved in a suitable solvent or the polymers can be polymerized directly in a suitable solvent. When water is used as a solvent often internal or external surfactants need to be added to keep the polymers stabilized in the water phase.

One way of making cyclic imide containing polymers is by co-polymerization of unsaturated cyclic imides with vinylic co-monomers. Examples of unsaturated cyclic imides are maleimide, itaconimide, citraconimide, succinimide and 2,3 dialkylmaleimides. Suitable vinyl monomers for use in the copolymer include vinyl aromatic monomers (such as styrene, α-methyl styrene, vinyl toluene and indene), mono-olefinic unsaturated hydrocarbons (such as ethylene, propylene and isobutylene), α-β-unsaturated carboxylic esters (such as acrylate esters (like ethylacrylate, butylacrylate and 2-ethylhexylacrylate), methacrylate esters (like methylmethacrylate, ethylmethacrylate and 2-hydroxyethylmethacrylate) and maleate diesters (like dioctylmaleate)), halogenated olefins (such as vinyl chloride and vinylidene chloride) and mixtures thereof. Preferably the copolymer contains readily commercially available styrene or alfa-methyl styrene, although the presence of styrene monomer units is most preferred.

Preferably use is made of a copolymer in which the cyclic imide monomer content ranges between 5-95 mole %, more preferably between 15 and 50 mole %.

Another convenient way of obtaining cyclic imide containing polymers is by transforming cyclic anhydride containing polymers with ammonia or an alkylamine. Cyclic anhydride containing polymers can for instance be obtained by co-polymerization of unsaturated cyclic anhydrides with vinylic co-monomers. Typical examples of unsaturated cyclic anhydrides are maleic anhydride, itaconic anhydride, citraconic anhydride and 2,3 dialkyl maleic anhydride. Suitable vinyl monomers for use in the copolymer include vinyl aromatic monomers (such as styrene, α-methyl styrene, vinyl toluene and indene), mono-olefinic unsaturated hydrocarbons (such as ethylene, propylene and isobutylene), α-β-unsaturated carboxylic esters (such as acrylate esters (like ethylacrylate, butylacrylate and 2-ethylhexylacrylate), methacrylate esters (like methylmethacrylate, ethylmethacrylate and 2-hydroxyethylmethacrylate) and maleate diesters (like dioctylmaleate)), halogenated olefins (such as vinyl chloride and vinylidene chloride) and mixtures thereof. Preferably the copolymer contains readily commercially available styrene or alfa-methyl styrene, although the presence of styrene monomer units is most preferred.

Transformation of the cyclic anhydride containing polymer into the cyclic imides has been described in patent application WO-A 99/45039, in patent application WO-A 2004/031249 and in patent application EP2007/006518, and the use of the products, described in these patent publications, for heat sealable coatings is part of this invention. WO2008/0414903 discloses encapsulated droplets which result in a homogenous coating that after drying has no water sensitivity. Ahokas et al. (Progress in organic coatings, 66:377-381) discloses cyclic imide containing coatings and their application in paper coatings, elaborating on characteristics like water retention, viscosity, surface roughness, gloss, brightness and thermal resistance of papers coated therewith.

It is advantageous that the cyclic imide containing polymer has a high Tg, preferably between 40 and 250°C, more preferably between 100 and 220°C. A very high Tg, such as above 250°C, is possible but as a result high sealing temperatures will be required that may damage the substrate. A low Tg, such as 15°C may lead to coating layers that are sticky.

The cyclic imide containing coating when applied to a substrate should show two different types of adhesion. First of all, when the coating dries on the substrate the coating layer should adhere well to the substrate, while it should not show stickiness at for instance room temperature. In a later stage the coating layer should be able to adhere well to another substrate by heating the coating layer to an elevated temperature.

To have adhesion with the substrate the cyclic imide containing coating formulation needs to have some film forming properties at temperatures below 120°C, the temperature at which the coated substrates are usually dried; e.g. on a paper coating machine. However, that involves a complicating factor; after the drying step the paper is winded on a roll, whereby the paper is under high pressure and is still at a temperature of above 70°C for several hours. It is obvious that under these circumstances the paper may not stick to each other. Therefore, in a preferred embodiment of this invention cyclic imide containing polymers are used that have limited film forming properties. Those polymers are for instance described in patent application WO-A 2004/031249 and in patent application EP-A 2007/006518. These products show limited adherence below their Tg. In order to keep this product well attached to each other and to the substrate a binder is usually added. Once the coating is heated above its Tg it will show a very good adherence with other substrates. Another advantage of the products described in patent application WO-A 2004/031249 and in patent application EP-A 2007/006518 is that the products are distinctive particles and as such they act as anti-blocking agents..

It is accordingly an objective of the present invention to provide the use of the cyclic imide containing polymers as described in patent application WO-A 2004/031249 and in patent application EP-A 2007/006518, as heat-sealable coating, more in particular as heat-sealable coating in the coating of paper or card board, in the manufacture of food packaging such as for instance for sandwich boxes, frozen food containers, cups, bowls, etc...; in particular in the manufacture of paper or card-board cups.

In a further preferred embodiment of the invention cyclic imide containing products as described in patent application EP-A 2007/006518 are used that show upon drying good water repellency. These products have a core-shell structure, whereby the shell has a cyclic imide containing product and the core is a non-water soluble product. Such products are for instance vegetable oils, waxes, rosin gums and derivatives, oligomers and polymers of ethylene, propylene, butene, butadiene and mixtures thereof. The higher the content of the aliphatic groups in the core-shell particles, the better will be the water repellency of the resultant coating.

Thus in a further embodiment the present invention provides the use of cyclic imide containing polymers as described in patent application EP-A 2007/006518, and further characterized in having a core-shell structure, whereby the shell is a cyclic imide containing polymer and the core is a non-water soluble product, as heat-sealable coating, more in particular as heat-sealable coating in the coating of paper or card board, in the manufacture of food packaging such as for instance for sandwich boxes, frozen food containers, cups, bowls, etc...; in particular in the manufacture of paper or card-board cups.

Furthermore, the described particles are nano-sized so that the resultant coating will have a nano-roughness. This leads to an enhancement of the surface tension properties. Hydrophobic products such as cyclic imide containing polymers will show super hydrophobicity if the resultant coating has a nano-roughness. This is of particular interest when the substrate is paper or card board as these materials have a tendency to take up water quite easily due to their porous character and the presence of many hydrophilic moieties

The cyclic imide containing polymers for use in the manufacturing of a heat-sealable coating as described herein, are in particularly made from the imidisation reaction of a co-polymer of a cyclic anhydride and vinyl monomers, having a cyclic anhydride (CA) content between 22 and 50 mole%, with an ammonium (NH₃) solution in an CA:NH₃ ratio of between 1.4:1 and 1:1.2 at an elevated temperature till at least 50% of the CA is imidised into the imide; more in particular from the imidisation reaction of a polystyrene maleic anhydride with a maleic anhydride (MA) content of between 22 and 34% using an ammonium (NH₃) solution in an MA:NH₃ ratio between 1.4:1 to 1:1.2 at an elevated temperature till at least 50% of the MA is imidised into maleimide, said cyclic imide containing polymer further being characterized in having a particle size between and about 25 - 150 nm; a solid content of between and about 25-45 wt%; and a pH of between 6,0 and- 9,0.

In an even further embodiment the aforementioned imidisation reaction is performed in the presence of a non-water soluble product, such as for example an oil, an alkane, a terpene or polyolefin or a wax; yielding core-shell particles wherein the shell consists of the cyclic imide containing polymer and the core of the non-water soluble products, said core-shell particles having a solid content between 45-- 65 wt%; a particle size of between and about 25 - 120 nm; and a pH of between and about 6,0 - 9,0.

As such the described products are very well suited to be applied on paper and card board and to obtain heat-sealable paper or card-board to replace paper and card board that has been laminated with polyethylene.

In addition to the above mentioned cyclic imide containing polymers, the heat-sealable coating may further contain other products such as binders, pigments, fillers, crosslinkers, plasticizers, tackifiers and other heat sealable resins.

Typical binders that can be used are lattices, polymer dispersions, starches, polyvinylalcohol, proteins but are preferably lattices and polymer dispersions such as styrene butadiene latex, styrene acrylate dispersion, polyacrylate dispersions, polyurethane dispersions, polyethylene vinylacetate dispersions, alkyd emulsions, natural rubber lattices, polyethylene acrylate dispersions and polyacetale dispersions. Also cyclic imide containing polymers can be added as binders. Typical examples are co-polymers of vinyl monomers and maleic anhydride of which the maleic anhydride is partially, mostly up to 70%, transformed into the maleimide. The remaining anhydrides are reacted with ammonia or an alkylamine to form the corresponding amides and ammonium salts. These chemical moieties gives the co-polymer full or partial water solubility, so that film forming can take place.

Also homo-and co-polymers of ethylene or propylene can be used as binders. As these polymers need to be water borne, it will be necessary to disperse these polymers by using external surfactants. Often these polymers contain some carboxylic acid groups by grafting carboxylic acid containing monomers on the chains or by co-polymerizing the ethylene or propylene with carboxylic acid containing monomers, such as acrylic acid, methacrylic acid or maleic anhydride. By neutralizing the carboxylic acid groups on the polymer chains with a base the polymers can be made water borne. Preferably this base is a volatile base that disappears during the drying process. This will reduce the water sensitivity of the resultant coating.

The ratio between the cyclic imide containing products and the binders can be between 100 : 0 to 5 : 95 and will be determined to a great extend by the Tg of the cyclic imide containing products and the binder. A binder with low Tg will be beneficial for the heat sealability but will be negative for the blocking of the coating. Principally, a coating containing only cyclic imide containing products can be used as a heat sealable coating. Usually, the hot air of a sealing equipment can reach temperatures up to 600° C, which is sufficient to let the cyclic imide containing products flow and to adhere with another substrate. However, such high temperatures may damage the substrate on which the coating is applied. Especially, in the case of card board the temperature of the substrate should not become higher than 250°C. For these applications, binders are used that enhance the sealability at temperatures below 250°C. In case a low Tg binder is added, for instance below 40°C, the amount of binder should not be higher than 50% to overcome blocking problems. It is possible to combine different binders with different Tg's. In case binders are used with a higher Tg, the amount of binder can be increased. For someone skilled in the art it will be obvious to determine which quantities of each binder give the best compromise between good sealability and good anti-blocking properties.

Interesting anti-blocking agents to be used are organic polymers with a Tg between 90 and 150°C. At temperatures below 90°C these products will function as anti-blocking agents, while at the heat sealing conditions these anti-blocking agents become soft and hence they will not hamper the heat sealing process. Even more interesting is the application of organic polymers with a Tg between 90 and 150°C that have a reduced density, for instance between 0.4 and 0.9 g per cm³. Due to their larger volume per weight these particles are very effective against blocking. A typical example is the use of polystyrene or co-polymers of styrene, such as styrene acrylic co-polymers, which have hollow spheres. These materials, together with the cyclic imide containing polymers with the high Tg will provide the good anti-blocking properties of the resultant coating. The total amount of products with anti-blocking properties can amount to 100%, but usually a binder of at least 5% of the total formulation will be present to keep the other products attached to each other and to the substrate.

A coating with more anti-blocking agents will need higher sealing temperatures or longer sealing times. For high speed applications such as production of drinking cups the total amount of product with anti-blocking properties will preferably be below 60% of the total coating formulation.

The binder can be chosen in such a way that extra properties can be obtained. Binders with very good film forming properties, such as low Tg polyacrylate dispersions or low Tg styrene-butadiene lattices, often have good barrier properties against oils and fats. Typical examples are card board cups for pop-corn or salad bowls that should withstand the oil of the packed materials.

Pigments and fillers can be used to a limited amount. These additives can also be used as anti-blocking agents. However, a too high content may disturb the heat sealing process and therefore their amount should preferably be limited to a maximum of 20% of the coating formulation. Typical pigments and fillers that can be used are CaCO₃, clay, talcum, glass beads, iron oxides, carbon black, gypsum. Pigments can be used to give a color to the coating. Usually, the pigments and fillers are dispersed in the water phase before they are added to a water borne cyclic imide containing product. In a preferred embodiment of the invention the pigments or fillers are surrounded by cyclic imide containing particles as they are described in patent application WO-A 2007/014635.

Crosslinkers to be used are water borne cross-linkers that can react with hydroxyl or carboxylic acid groups. Typical examples are aldehyde containing products such as glyoxal or zirconium salts, oxazoline and epoxy containing products. Usually, they are added in an amount ranging between 0.1 to 3% of the total coating formulation.

Plasticizers are products that help flowing the heat sealable material. These are products with a low softening point. Preferably, they do not decrease the water repellency of the dried coating. Typical examples are wax dispersions or oil emulsions. These can originate from low boiling or low melting fractions from mineral oil or they can have a natural origin such as vegetable oils. Typical examples of vegetable oils are palm oil, soy and hydrogenated soy oil, sunflower oil, rapeseed oil, castor oil, tall oil, rosin gum and derivatives. Typically, plasticizers are added in amounts less than 20% of the total coating formulation.

Tackifiers are usually resinous materials that help increasing the tack when substrates are brought into contact. This can be especially needed when adhesion on low surface energy substrates is required. Examples of tackifiers can be acrylic emulsions, rosin derivatives, low molecular weight polyethylenes. Usually, they are added in amounts ranging between 0,5 to 30% of the total coating formulation, preferably between 3 to 20%.

. A man skilled in the art will be able to select the appropriate heat sealable polymers, anti-blocking agents, tackifiers and fillers according to the conditions that are implied by certain drying and sealing processes that are common for certain commercial applications.

Thus in a further aspect, the present invention provides a heat-sealable coating comprising; - a cyclic imide co-polymer consisting of a co-polymer of cyclic imides and vinyl co-monomers; in particular a cyclic imide co-polymer wherein said cyclic imide co-polymer is the reaction product of an imidisation reaction of a co-polymer of a cyclic anhydride and vinyl monomers, having a cyclic anhydride (CA) content between 22 and 50 mole%, with an ammonium (NH₃) solution in an CA:NH₃ ratio of between 1.4:1 and 1:1.2 at an elevated temperature till at least 50% of the CA is imidised into the imide; more in particular a cyclic imide co-polymer wherein said cyclic imide co-polymer is the reaction product of a polystyrene maleic anhydride having a maleic anhydride (MA) content between 22 and 34 mole%, with an ammonium (NH₃) solution in an MA:NH₃ ratio of between 1.4:1 and 1:1.2 at an elevated temperature till at least 50% of the MA is imidised into maleimide, said cyclic imide containing polymer further being characterized in having a particle size between and about 25 - 150 nm; a solid content of between and about 25 and 45 wt%; and a pH of between 6.0 and 9.0.; even more in particular a cyclic imide co-polymer wherein said cyclic imide co-polymer is the reaction product of an imidisation reaction of a polystyrene maleic anhydride with an maleic anhydride (MA) content between 22 and 34 mole% using an ammonium (NH₃) solution in an MA:NH₃ ratio between 1.4:1 and 1:1.2 at an elevated temperature in the present of a non-water soluble product, such as for example an oil, an alkane, a terpene or polyolefin or a wax, till at least 50% of the MA is imidised into maleimide; yielding core-shell particles wherein the shell consists of the cyclic imide containing polymer and the core of the non-water soluble products, said core-shell particles having a solid content of between and about 45-65 wt%; a particle size of between and about 25 - 120 nm; and a pH of between and about 6.0-9.0;
- one or more binders selected from the group consisting of a polyacrylate, a polystyrene butadiene, a polystyrene acrylate, a polyethylene acrylate or a polyethylene homopolymer; and - one or more anti-blocking agent consisting of a polymer with a glass transition temperature or a melting point between 80 and 140°C, preferably with a density lower than 0,85 gram per cubic centimeter.

As used herein, the heat-sealable coating is further characterized in that the cyclic imide containing polymer is present between and about 20 and 80 wt%, the total amont of binders is between and about 20 and 60 wt%, and the total amount of anti-blocking agent between 5 and 60 wt%. As already mentioned hereinbefore, the heat-sealable coating may further contain one or more of the following components;
- tackifiers in amounts ranging between 0,5 to 30 wt% of the total coating formulation, preferably between 3 to 20 wt%;
- Crosslinkers in amounts ranging between 0.1 to 3 wt% of the total coating formulation; and
- Pigments and fillers in an amount limited to a maximum of 20 wt% of the coating formulation.

In a particular embodiment and for use in fast heat-sealing applications, such as in the manufacture of drinking cups, the present invention provides a heat-sealable coating comprising;
- cyclic imide containing polymer in an amount between and about 20 and 80 wt%; in particular between and about 20 and 50 wt%; more in particular at about 30 wt% of the total coating formulation;
- one or more binders in a total amount between about 20 and 60 wt%; in particular between and about 40 and 60 wt%; more in particular in a total amount of about 45 wt% of the total coating formulation;
- an anti-blocking agent in an amount between and about 5 and 60 wt%; in particular between and about 10 and 25 wt% of the total coating formulation; and
- a tackifier in an amount between and about between 0,5 to 30 wt%; in particular between and about 0,5 to 10 wt%; more in particular at about 5 wt% of the total coating formulation.

In a more particular embodiment the 'fast' heat-sealable coating consists of;
- cyclic imide containing polymer in an amount between and about 20 and 80 wt%; in particular between and about 20 and 50 wt%; more in particular at about 30 wt% of the total coating formulation;
- one or more binders in a total amount between about 20 and 60 wt%; in particular between and about 40 and 60 wt%; more in particular in a total amount of about 45 wt% of the total coating formulation;
- an anti-blocking agent in an amount between and about 5 and 60 wt%; in particular between and about 10 and 25 wt% of the total coating formulation; and
- a tackifier in an amount between and about between 0,5 to 30 wt%; in particular between and about 0,5 to 10 wt%; more in particular at about 5 wt% of the total coating formulation.

In said fast heat-sealing coating;
- the cyclic imide containing polymer preferably consists of a cyclic imide co-polymer consisting of a co-polymer of cyclic imides and vinyl co-monomers; more in particular a cyclic imide co-polymer wherein said cyclic imide co-polymer is the reaction product of an imidisation reaction of a polystyrene maleic anhydride with an maleic anhydride (MA) content between 22 and 34 mole% using an ammonium (NH₃) solution in an MA:NH₃ ratio between 1.4:1 and 1:1.2 at an elevated temperature in the present of a non-water soluble product, such as for example an oil, an alkane, a terpene or polyolefin or a wax, till at least 50% of the MA is imidised into maleimide; yielding core-shell particles wherein the shell consists of the cyclic imide containing polymer and the core of the non-water soluble products, said core-shell particles having a solid content of between and about 45-65 wt%; a particle size of between and about 25 - 120 nm; and a pH of between and about 6.0-9.0;
- the one or more binders are preferably selected from the group consisting of a polyacrylate, a styrene butadiene, a polystyrene acrylate, a polyethylene acrylate or a polyethylene homopolymer; more in particular a polyacrylate and a polystyrene acrylate;
- the anti-blocking agent consisting of a polymer with a glass transition temperature or a melting point between 80 and 140°C, such as for example polystyrene or co-polymers of styrene; more in particular consisting of a styrene acrylic co-polymer, preferably a polymer with a density lower than 0,85 gram per cubic centimeter.
- the tackifier is selected from the group consisting of acrylic emulsions, rosin derivatives, and low molecular weight polyethylenes.

The heat-sealable coatings as described herein can be applied on different substrates. Typical substrates are paper, card board, wood, thermoplastic and thermoset materials, glass, textile, leather and metals. The solid content of the coating formulation can range between 0.1 and 85%, but preferably will be between 20 and 70%. It is obvious that a high solids content is advantageous because less water needs to be evaporated.

Thus in a further embodiment the invention relates to a heat-sealable substrate consisting of a substrate coated with a layer of a heat-sealable coating as described herein.

The invention also relates to a process for applying the heat sealable coating to a basic layer / substrate, thus obtaining a heat sealable substrate,

As such the coating layer can be applied on a carrier layer, i.e. substrate by typical coating techniques such as spraying, smearing, dipping, printing, rolling and painting. For paper and card board applications coating layers are mostly applied by a blade coater, a knife coater, a curtain coater, a size press or a film press. Once applied, the coating can be dried to the air or a more rapid drying can be achieved by bringing the coated substrate under infra-red lamps or in an oven. A man skilled in the art will make sure that the temperature or the residence time is not too high so that the dried coating will not stick to each other and that the coating will retain its heat sealability properties. The amount of coating applied on the substrate will be dependent on the type of carrier layer, i.e. substrate to be coated and on the required adhesion to be achieved between the substrates. For porous materials a higher amount of coating will be needed. For paper and card board usually a layer of 2 to 25 gram coating per square meter could be employed, but preferably a layer between 3 and 14 gram per square meter is applied. A thinner layer is beneficial as it will reduce the weight of the packaging material and will reduce costs, while a thicker layer might be necessary to increase the adherence during the heat sealing.

It is also possible to apply multiple coating layers on the carrier layer, i.e. substrate. Especially, when porous materials are treated it is interesting to apply first a coating layer that closes the pores of the substrate. Preferably, this coating layer forms a closed film. A typical film would be formed from a formulation containing a polystyrene butadiene latex or a polyacrylate dispersion that may contain fillers and pigments up to 95%. Preferably the amount of filler is between 20 and 80%. This formulation may also contain some water repellency agents, such as for instance waxes or the cyclic imide containing products as used according to this invention, but the amounts should be limited in order to allow the application of a second layer containing the cyclic imide that will provide the heat sealability properties.

The coated substrate can be sealed to another coated substrate, but it is also possible to heat seal the coated substrate with a non-treated substrate. In case the non-treated substrate is not adhering well to the coated substrate, usually, the application of a tiny layer of coating according to this patent application, for instance 1 to 3 gsm, is sufficient to make the substrate good sealable.

The coated substrates can be sealed by the classical processes such as the ones based on for instance hot air and ultra-son. During the heating a pressure is applied on the substrates to improve the adherence.

In case paper or card board is used as a carrier layer it has been found that the coated material according to this invention is re-pulpable under the same conditions as non-coated paper and card board. This has a major impact on the costs and the environmental friendliness of the packaging material. First of all, during the formation of the shaped packaging material, there is some left over paper or card board that can be brought back to the pulp machines. Secondly, the used packaging material will find a second life as recycled paper or card board.

The invention further relates to a coating layer that shows a good water repellency. A coating layer with good heat sealability and good water repellency can substitute thermoplastic layers such as polyethylene and polypropylene. These thermoplastic layers often disturb the recycling process of the substrates that are treated with these layers.

The cyclic imide containing layer can be brought on the substrate by a lamination process or by a coating process. Preferably the application is done by bringing the compound on a substrate out of a solvent. By doing so thinner layers can be put on the substrate compared to a lamination process. Even more preferably the solvent is primarily water. Water has the advantage to be non-toxic, non-flammable and not to contribute to the exhaust of volatile organic compounds. Furthermore, in many industrial applications machines are so designed that no organic solvents can be used at all. The treated substrates have a high stability, do not stick to other materials, but at high temperatures the products can be sealed to each other or to other materials.

Preferably the dispersed cyclic imide containing product in the water phase has a particle size between 20 and 500 nm, more especially between 30 and 200 nm. According to another aspect of the invention the dispersed cyclic imide containing particles have a core -shell structure, in which the shell comprises a coating composition containing a cyclic imide and the core is a non-water soluble product. Examples of such a core-shell structure have been described in the International Patent Application WO-A-2008014903.

The invention and its advantage will be further elucidated by means of the following examples.

### Example 1: Preparation of cyclic imide containing polymer with a paraffin encapsulated

To a 1 litre double walled, oil heated autoclave, having an anchor stirrer, 120g of a polystyrene maleic anhydride (SMA) (grade: 26080; from Polyscope, the Netherlands) and 400g of water were added. The SMA had a maleic anhydride content of 26 mole % and a molecular weight of 80.000 g/mole. To this reaction mixture was added 280g of a molten parafine wax with a melting point of 57°C and 21,7g of a 25% NH3 solution so that the maleic anhydride (MA):NH₃ ratio was about 1:1.

The temperature was raised to 160°C and this temperature was maintained during 4 hours. Thereafter, the reaction mixture was slowly cooled down to room temperature. A polymer dispersion was obtained having a solid content of approximately 50 wt. %, the particle size being between 25 and 120 nm. The pH value was 7.2, indicating an almost complete conversion of the maleic anhydride groups into maleimides.

### Example 2: Preparation of a cyclic imide containing polymer with a hydrogenated soybean oil encapsulated

The experiment of example 1 was repeated except that the parafine wax is replaced by a hydrogenated soybean oil and that the amount of 25% NH3 solution was 25.0g, so that the maleic anhydride (MA):NH₃ ratio was about 1:1.15. A polymer dispersion was obtained having a solid content of approximately 50 wt. %, the particle size being between 35 and 110 nm. The pH value was 6.8.

### Example 3: Preparation of a cyclic imide containing polymer with a mixture of soybean oil and paraffin wax encapsulated

The experiment of example 1 was repeated except that the parafine wax is partially replaced by soybean oil and the solids content was increased to 60%. Therefore 144g SMA, 320g of water, 168g of paraffin wax, 168 of soybean oil and 27,3g of a 25% NH3 solution were employed. The particle size were being between 30 and 80 nm. The pH value was 6.9.

### Example 4: Preparation of a cyclic imide containing polymer

To a 1 litre double walled, oil heated autoclave, having an anchor stirrer, 280g of a polystyrene maleic anhydride (SMA) and 520g of water were added. The SMA had a maleic anhydride content of 26 mole % and a molecular weight of 80.000 g/mole. To this reaction mixture was added 50.6g of a 25% NH3 solution so that the maleic anhydride (MA):NH₃ ratio was about 1:1.

The temperature was raised to160°C and this temperature was maintained during 4 hours. Thereafter, the reaction mixture was slowly cooled down to room temperature. A polymer dispersion was obtained having a solid content of approximately 35 wt. %, the particle size being between 60 and 150 nm. The pH value was 7.0.

### Example 5: Preparation of a cyclic imide containing polymer with film forming properties

To a 1 litre double walled, oil heated autoclave, having an anchor stirrer, 280g of a polystyrene maleic anhydride (SMA) and 800g of water were added. The SMA had a maleic anhydride content of 26 mole % and a molecular weight of 80.000 g/mole. To this reaction mixture was added 106.3g of a 25% NH3 solution so that the maleic anhydride (MA):NH₃ ratio was about 1:2.1.

The temperature was raised to 160°C and this temperature was maintained during 4 hours. Thereafter, the reaction mixture was slowly cooled down to room temperature. A polymer dispersion was obtained having a solid content of approximately 23,6 wt. %, the particle size being between 80 and 180 nm. The pH value was 9.5.

### Formulation of heat sealable coatings

### Formulation 1:

50 g of the dispersion from example 1 was mixed with 50g of a binder consisting of the polyacrylate dispersion Acronal S514 (from BASF Germany), having a solids content of 50%.

### Formulation 2

50g of the dispersion of example 2 was mixed with 40g of water and 40g of a Lomacol EV203 (from Lomat Belgium), which is a binder consisting of a 60% water dispersion of a co-polymer of ethylene and vinylacetate.

### Formulation 3

100g Primacor 5990i, a binder consisting of an ethylene acrylate co-polymer from DOW Chemical was first dispersed in water by treating the polymer under pressure at 120°C with 200g of water and 1 equivalent of ammonia. To the dispersion was added 50g of water and 50g of the polymer dispersion from example 1.

### Formulation 4

42 g of the dispersion from example 3 was mixed with 50g of a binder consisting of the polyacrylate dispersion Acronal S514 (from BASF Germany), having a solids content of 54.3%.

### Formulation 5

22.4g of the dispersion from example 3 was mixed with a binder consisting of 50g of the polyacrylate dispersion Acronal S514 (from BASF Germany), having a solids content of 53%.

### Formulation 6

40g of a dispersion from example 3 was mixed with 80g of the film forming cyclic imide containing polymer from example 5. The total solids content was 35.7%.

### Formulation 7

58g of a dispersion from example 3 was mixed with 80g of the binder polyacrylate Orgal P056V (from Organic Kymya, Turkey), 10g of the binder polystyrene acrylate Joncryl Eco 2124 (from BASF Germany), 50g of the styrene acrylic co-polymer anti-blocking agent Opac (from Organic Kimya, Turkey) and 8,3g of the rosin based tackifier Snowtack100G (from Hexion). The total solids content was 48,5%. The dried coating consists of 35% of the cyclic imide containing polymer, 40% of the Orgal P056V binder, 5% of the Joncryl Eco2124 binder, 15% of the anti-blocking agent and 5% of the tackifier.

### Applications

The formulations were applied on Ensocup card board, having a weight of 215 gram per square meter. After application of the formulation the card board was dried for 1 minute in an oven heated at 120°C. After cooling down the card board was stored at room temperature for 24 hours. Thereafter the heat sealability was tested and the Cobb value was measured. The Cobb value is a measure of the water up-take during a well defined period of time. The value is the amount of grams of water taken up by one square meter of card board.

The heat sealability test was performed on a W-300D(A) apparatus from Wu-Hsing Electronics Ltd. Following conditions were applied: 250°C, 6 bar, 3 seconds. The coated board was heat sealed with another coated board and with a non-coated board. The results are described below.

### Measuring of the heat sealability and the Cobb values of the coated card boards

| **N.M.: not measured** | Heat sealability coated on non-coated board | Heat sealability coated on coated board | Cobb value 3 hours |
|---|---|---|---|
| Blanco | No | No | 120 |
| Example 3; 8 gsm | OK | OK | N.M. |
| Example 4; 8 gsm | OK | OK | N.M |
| Form. 1; 12 gsm | OK | OK | 17 |
| Form. 2; 12 gsm | OK | OK | 39 |
| Form. 3; 12 gsm | OK | OK | 35 |
| Form. 4; 12 gsm | OK | OK | 17 |
| Form. 5; 12 gsm | OK | OK | 12 |
| Form. 6; 12 gsm | OK | OK | 23 |
| 1^{st} coating layer Acronal; 8 gsm | OK | OK | 25 |
| 2^{nd} coating layer form. 3; 4 gsm | | | |

### Combination of good sealability with good blocking resistance

Formulation 7 was applied on Ensocup card board, having a weight of 215 gsm. The coated board was dried at 120°C for 30 seconds. The total dried coating weight was 12 gsm. Then the paper was winded on a roll and kept at a temperature of 60°C for 3 hours. No sticking of the coating took place with the non-coated back side of the cup stock.

The cup stock was cooled down to room temperature and was sealed with the W-300D(A) apparatus from Wu-Hsing Electronics Ltd. The coated cup stock was sealed with a similar coated and with a non coated cup stock. In both cases sealing took place within 1,5 seconds at 170°C. The Cobb value of the coated cup stock measured over 3 hours amounted to 19. This experiment proofs that by combining the cyclic imide containing product with binders, tackifiers and anti-blocking agents it is possible to have a board that has a good blocking resistance, while the sealability can be very fast.

### Production of cups

Ensocup card board, having a weight of 220 gram per square was coated at one side with 12 gram dry weight per square meter of formulation 4 and at the other side with 2 gram of dry weight per square meter of the same formulation. The card board was used on a PMC 1002 paper cup machine from Paper Machinery Corporation, which produced cups of 4.75 gram per piece. The thicker coated layer was at the inside of the cups. Different cups were filled with water, ice-cold carbonated drinks and hot coffee. After standing for 3 hours the cups did not show any leakage, while the cups do not become soft.

## Claims

1. Use of a substrate coated with a coating layer wherein the coating layer is **characterized in that** it comprises a cyclic imide containing polymer that is the reaction product of an imidisation reaction of a co-polymer of a cyclic anhydride and vinyl monomers, having a cyclic anhydride (CA) content between 22 and 50 mole%, with an ammonium (NH₃) solution in an CA:NH₃ ratio of between 1.4:1 and 1:1.2 at an elevated temperature till at least 50% of the CA is imidised into the imide, in the manufacture of a heat sealable substrate.

2. Use according to claim 1 wherein the cyclic imide containing polymer is the reaction product of an imidisation reaction of a polystyrene maleic anhydride having a maleic anhydride (MA) content between 22 and 34 mole%, with an ammonium (NH₃) solution in an MA:NH₃ ratio of between 1.4:1 and 1:1.2 at an elevated temperature till at least 50% of the MA is imidised into maleimide, said cyclic imide containing polymer further being **characterized in** having a particle size between and about 25 - 150 nm; a solid content of between and about 25 and 45 wt%; and a pH of between 6.0 and 9.0.

3. Use according to claims 1 or 2, wherein the aforementioned imidisation reaction is performed in the presence of a non-water soluble product, such as for example an oil, an alkane, a terpene or polyolefin or a wax; yielding core-shell particles wherein the shell consists of the cyclic imide containing polymer and the core of the non-water soluble products, said core-shell particles having a solid content of between and about 45 and 65 wt%; a particle size of between and about 25 - 120 nm; and a pH of between 6.0 and 9.0.

4. Use according to any one of claims 1 to 3, further **characterized in that** coating layer also contains a binder and/or anti-blocking agents.

5. Use according to anyone of the preceding claims, **characterized in that** the substrate has a roughness between 5 and 40 nanometer, preferably between 7 and 25 nanometer.

6. Use according to anyone of the preceding claims, **characterized in that** the substrate is selected from paper, card board, plastic, metal, leather, textile or wood; more in particular paper or card board.

7. A process for making a heat sealable substrate, **characterized in that** a coating composition containing a cyclic imide as defined in any one of claims 1 and 2 is brought on the substrate from a water borne formulation.

8. Use of cyclic imide containing polymers, as heat-sealable coating, more in particular as heat-sealable coating in the coating of paper or card board; including sandwich boxes, frozen food containers, cups, bowls, and the like; in particular for use as heat-sealable coating in the manufacture of paper or card-board cups.

9. The use according to claim 8, wherein the cyclic imide containing polymer is a co-polymer of cyclic imides and vinyl co-monomers.

10. The use according to claim 8, wherein the cyclic imide containing polymer is the reaction product of an imidisation reaction of a co-polymer of a cyclic anhydride and vinyl monomers, having a cyclic anhydride (CA) content between 22 and 50 mole%, with an ammonium (NH₃) solution in an CA:NH₃ ratio of between 1.4:1 and 1:1.2 at an elevated temperature till at least 50% of the CA is imidised into the imide.

11. The use according to claim 8, wherein the cyclic imide co-polymer is the reaction product of an imidisation reaction of a polystyrene maleic anhydride with a maleic anhydride (MA) content between 22 and 34 mole% using an ammonium (NH₃) solution in an MA:NH₃ ratio between 1.4:1 and 1:1.2 at an elevated temperature till at least 50% of the MA is imidised into maleimide, said cyclic imide containing polymer further being **characterized in** having a particle size between and about 25 - 150 nm; a solid contant of between and about 25-45 wt%; and a pH of between and about 6,0-9.0.

12. The use according to claim 8, wherein the cyclic imide co-polymer is the reaction product of an imidisation reaction of a polystyrene maleic anhydride with a maleic anhydride (MA) content between 22 and 34 mole% using an ammonium (NH₃) solution in an MA:NH₃ ratio of about 1.4:1 to 1:1.2 at an elevated temperature in the present of a non-water soluble product, such as for example an oil, an alkane, a terpene or polyolefin or a wax, till at least 50% of the MA is imidised into maleimide; yielding core-shell particles wherein the shell consists of the cyclic imide containing polymer and the core of the non-water soluble products, said core-shell particles having a solid content of between and about 45-65 wt%; a particle size of between and about 25 - 120 nm; and a pH of between and about 6.0-9.0.

13. The use according to any one of claims 8 to 12, wherein the heat-sealable coating further comprises a binder and/or anti-blocking agents.

14. A heat-sealable coating comprising;
- a cyclic imide co-polymer wherein said cyclic imide co-polymer is the reaction product of an imidisation reaction of a polystyrene maleic anhydride with an maleic anhydride (MA) content between 22 and 34mole% using an ammonium (NH₃) solution in an MA:NH₃ ratio between 1.4:1 and 1:1.2 at an elevated temperature in the present of a non-water soluble product, such as for example an oil, an alkane, a terpene or polyolefin or a wax, till at least 50% of the MA is imidised into maleimide; yielding core-shell particles wherein the shell consists of the cyclic imide containing polymer and the core of the non-water soluble products, said core-shell particles having a solid content of between and about 45-65 wt%; a particle size of between and about 25 - 120 nm; and a pH of between and about 6.0-9.0;
- a binder selected from the group consisting of a polyacrylate, a styrene butadiene, a polystyrene acrylate, a polyethylene acrylate or a polyethylene homopolymer; and
- an anti-blocking agent consisting of a styrene acrylic co-polymer with a glass transition temperature or a melting point between 80 and 140°C, preferably with a density lower than 0,85 gram per cubic centimeter.

15. A heat sealable coating according to claim 14, **characterised in that** the cyclic imide containing polymer is present between 20 and 80%, the binder between 20 and 60% and the anti-blocking agent between 3 and 60%.

## Patentansprüche

1. Eine Verwendung eines Substrats mit einer Beschichtungsschicht, wobei die Beschichtungsschicht **dadurch gekennzeichnet ist, dass** sie ein zyklisches Imid enthält, welches Polymer enthält, das ein Reaktionsprodukt einer Reaktions-Imidisierung eines Copolymers eines zyklischen Anhydrids mit einem Vinylmonomeren ist, und einen zyklischen Anhydrid (CA)-Gehalt zwischen 22 und 50 Mol% hat, mit einer Ammonium (NH3)-Lösung in einem CA: NH3-Verhältnis zwischen 1,4:1 und 1:1,2 bei erhöhter Temperatur, bis mindestens 50% des CA während der Herstellung eines heißsiegelfähigen Substrats in das Imid imidisiert ist.

2. Eine Verwendung nach Anspruch 1, wobei das ein zyklisches Imid enthaltende Polymer das Reaktionsprodukt einer Indimisierungs-Reaktion eines Polystyrol-Maleinsäureanhydrids ist, welches einen Maleinsäureanhydrid (MA)-Gehalt zwischen 22 und 34 Mol% aufweist, mit einer Ammonium (NH3)-Lösung in einem MA:NH3-Verhältnis zwischen 1,4:1 und 1:1,2 bei erhöhter Temperatur, bis mindestens 50% des MA in Maleimid imidisiert ist, das besagtes, ein zyklisches Imid enthaltendes Polymer ferner dahingehend charakterisiert ist, eine Partikelgröße zwischen und in etwa 25 - 150 nm aufzuweisen; einen Feststoffgehalt zwischen und in etwa 25 und 45 Gew%; und einen pH-Wert zwischen 6,0 und 9,0 besitzt.

3. Eine Verwendung nach Anspruch 1 oder 2, wobei die zuvor erwähnte Imidisierungs-Reaktion in Gegenwart eines nicht-wasserlöslichen Produkts durchgeführt wird, wie beispielsweise einem Öl, einem Alkan, einem Terpen oder einem Polyolefin oder einem Wachs; Kern-Schale-Partikel hervorbringt, wobei die Schale aus dem zyklischen Imid enthaltenden Polymer und dem Kern nicht-wasserlöslicher Produkte besteht, wobei die besagten Kern-Schale-Partikel einen Feststoffgehalt zwischen und in etwa 45 und 65 Gew% aufweisen; eine Partikelgröße zwischen und in etwa 25 bis 120 nm; und einen pH-Wert zwischen 6,0 und 9,0 besitzen.

4. Eine Verwendung nach einem der Ansprüche 1 bis 3, die ferner **dadurch gekennzeichnet ist, dass** die Beschichtungsschicht auch ein Bindemittel und/oder Antiblockmittel enthält.

5. Eine Verwendung nach einem der vorhergehenden Ansprüche, die **dadurch gekennzeichnet ist, dass** das Substrat eine Rauhigkeit zwischen 5 und 40 Nanometer, vorzugsweise zwischen 7 und 25 Nanometer aufweist.

6. Eine Verwendung nach einem der vorhergehenden Ansprüche, die **dadurch gekennzeichnet ist, dass** das Substrat aus Papier, Pappe, Kunststoff, Metall, Leder, Textilien oder Holz ausgewählt wurde; vorzugsweise aus Papier oder Pappe besteht.

7. Ein Verfahren zur Herstellung eines heißsiegelfähigen Substrats, das **dadurch gekennzeichnet ist, dass** eine Beschichtungszusammensetzung, die ein zyklisches Imid, wie in einem der Ansprüche 1 und 2 definiert enthält, das aus einer wässrigen Formulierung stammend auf dem Substrat aufgebracht ist.

8. Eine Verwendung von zyklische Imide enthaltende Polymere als eine heißsiegelbare Beschichtung, insbesondere mehr als eine Siegelschicht für eine Beschichtung von Papier oder Pappe; einschließlich von Sandwich-Boxen, Tiefkühlkost-Behältern, Tassen, Schüsseln, und dergleichen; insbesondere zur Verwendung als Siegelschicht bei der Herstellung von Papier- oder Pappbechern.

9. Eine Verwendung nach Anspruch 8, wobei das zyklische Imid enthaltende Polymer ein Copolymer von zyklischen Imiden und Vinyl-Comonomeren ist.

10. Eine Verwendung nach Anspruch 8, wobei das zyklische Imid enthaltende Polymer das Reaktionsprodukt einer Imidisierungs-Reaktion eines Copolymer eines zyklischen Anhydrids und Vinylmonomeren ist, einen zyklischen Anhydrid (CA)-Gehalt zwischen 22 und 50 Mol% aufweist, mit einer Ammonium (NH3)-Lösung in einem CA:NH3-Verhältnis zwischen 1,4: 1 und 1: 1,2 bei erhöhter Temperatur, bis mindestens 50% der CA in das Imid imidisiert ist.

11. Eine Verwendung nach Anspruch 8, wobei das zyklische Imid-Copolymer das Reaktionsprodukt einer Imidisierungs-Reaktion eines Polystyrol-Maleinsäureanhydrids ist, mit einem Maleinsäureanhydrid (MA)-Gehalt zwischen 22 und 34 Mol%, welches eine Ammonium (NH3)-Lösung im MA:NH3-Verhältnis zwischen 1,4: 1 und 1: 1,2 bei erhöhter Temperatur verwendet, bis mindestens 50% des MA in Maleimid imidisiert ist, der besagte zyklisches Imid enthaltende Polymer ferner dadurch charakterisiert ist, eine Partikelgröße zwischen und in etwa 25 - 150 nm aufzuweisen; einen Feststoffanteil zwischen und in etwa 25-45 Gew%; und einen pH-Wert zwischen und in etwa 6,0-9.0 besitzt.

12. Eine Verwendung nach Anspruch 8, wobei das zyklische Imid-Copolymer das Reaktionsprodukt einer Imidisierungs-Reaktion eines Polystyrol-Maleinsäureanhydrids mit einem Maleinsäureanhydrid (MA)-Gehalt zwischen 22 und 34 Mol% ist, welches eine Ammonium (NH3)-Lösung im MA:NH3-Verhältnis von etwa 1,4:1 bis 1:1,2 bei erhöhter Temperatur in der Gegenwart eines nicht-wasserlöslichen Produkts, wie beispielsweise ein Öl, ein Alkan, ein Terpen oder ein Polyolefin oder ein Wachs verwendet, bis zumindest 50% des MA in Maleimid imidisiert ist; Kern-Schale-Partikel hervorbringt, wobei die Schale aus einem zyklische Imide enthaltenden Polymer und dem Kern der nicht-wasserlöslichen Produkte besteht, wobei die besagten Kern-Schale-Partikel einen Feststoffgehalt zwischen und in etwa 45-65 Gew% aufweisen; eine Partikelgröße zwischen und in etwa 25 bis 120 nm; und einen pH-Wert zwischen und in etwa 6,0-9,0 besitzen.

13. Eine Verwendung nach einem der Ansprüche 8 bis 12, wobei die Siegelschicht außerdem ein Bindemittel und/oder Antiblockmittel enthält.

14. Eine Heißsiegelschicht, die das Folgende beinhaltet;
- Ein zyklisches Imid-Copolymer, wobei das zyklische Imid-Copolymer das Reaktionsprodukt einer Imidisierung-Reaktion eines Polystyrol-Maleinsäureanhydrids mit einem Maleinsäureanhydrid (MA)-Gehalt zwischen 22 und 34 Mol% ist, welches eine Ammonium (NH3)-Lösung in einem MA:NH3-Verhältnis zwischen 1,4:1 und 1:1,2 bei erhöhter Temperatur in der Gegenwart eines nicht-wasserlöslichen Produkts, wie beispielsweise ein Öl, ein Alkan, ein Terpen oder Polyolefin oder ein Wachs verwendet, bis mindestens 50% des MA in Maleimid imidisiert ist; Kern-Schale-Partikel hervorbringt, wobei die Schale aus dem zyklischen Imid enthaltende Polymer und dem Kern der nicht-wasserlöslichen Produkte besteht, die besagten Kern-Schale-Partikel einen Feststoffgehalt zwischen und in etwa 45-65 Gew% aufweisen; eine Partikelgröße zwischen und in etwa 25 bis 120 nm; und einen pH-Wert zwischen und in etwa 6,0-9,0 besitzen;
- Einem Bindemittel, welches aus der Gruppe bestehend aus einem Polyacrylat, einem Styrol-Butadien, einem Polystyrol-Acrylat, einem Polyethylen-Acrylat oder einem Polyethylen-Homopolymer ausgewählt ist; und
- Einem Antiblockiermittel, welches aus einem Styrol-Acryl-Copolymer mit einer Glasübergangstemperatur oder einem Schmelzpunkt zwischen 80 und 1400C besteht, vorzugsweise mit einer Dichte von weniger als 0,85 Gramm pro Kubikzentimeter.

15. Eine heißsiegelbare Beschichtung nach Anspruch 14, die **dadurch gekennzeichnet ist, dass** das zyklische Imid enthaltende Polymer in zwischen 20 und 80%, das Bindemittel in zwischen 20 und 60% und das Antiblockiermittel in zwischen 3 und 60% aller Fälle vorhanden ist.

## Revendications

1. Utilisation d'un substrat revêtu d'une couche de revêtement où la couche de revêtement est **caractérisée en ce qu'**elle comprend un imide cyclique contenant un polymère y est le produit de réaction d'une réaction d'imidisation d'un copolymère d'un anhydride cyclique et de monomères de vinyle, ayant un contenu d'anhydride cyclique (CA) de 22 à 50 % molaire, avec une solution d'ammonium (NH₃) dans un CA:NH₃ avec un ratio entre 1.4:1 et 1:1.2 à une température élevée jusqu'à au moins 50 % du CA est qui est imidisé dans l'imide, au cours de la fabrication d'un substrat thermoscellable.

2. Utilisation selon la revendication 1 ou l'imide cyclique contenant un polymère est le produit de réaction d'une réaction d'imidisation d'un contenu de polystyrène d'anhydride maléique (MA) de 22 et 34 % molaire, avec une solution d'ammonium (NH₃) dans un ratio MA:NH_{3 de}1.4:1 et 1:1.2 à une température élevée jusqu'à au moins 50 % du MA qui est imidisé en maléimide, ledit imide cyclique contenant un polymère **caractérisé par le fait qu'**il a une granulométrie d'environ 25 - 150 nm; un contenu solide d'environ 25 et 45 wt%; et un pH de 6.0 et 9.0.

3. Utilisation selon la revendication 1 ou 2, où la réaction d'imidisation mentionnée précédemment est exécutée en présence d'un produit non soluble dans l'eau, par exemple l'huile, un alcane, un terpène ou polyoléfine ou de la cire ; le rendement élevé particulaire noyau-enveloppe ou l'enveloppe consiste en un imide cyclique contenant un polymère et les noyaux des produits non solubles dans l'eau , lesdites particules noyau-enveloppes ayant un contenu solide d'environ 45 et 65 wt%; et une granulométrie d'environ 25 - 120 nm; et un de 6.0 et 9.0.

4. Utilisation selon les revendications 1 à 3, **caractérisée en ce que** la couche de revêtement contient également un liant et/ou des agents anti adhérent.

5. Utilisation selon les revendications précédentes, **caractérisée en ce que** le substrat possède une rugosité entre 5 et 40 nanomètres, de préférence entre 7 et 25 nanomètres.

6. Utilisation selon les revendications précédentes, **caractérisée en ce que** le substrat est sélectionné à partir de papier, de carton, de plastique, de métal, de cuir, de textile ou de bois ; plus particulièrement de papier de carton.

7. Un processus pour élaborer un substrat thermoscellable, **caractérisé en ce que** la composition du revêtement contient un imide cyclique comme il était défini dans les revendications 1 et 2 en ce qui concerne le substrat provenant d'une formule d'origine hydrique.

8. Utilisation d'un imide contenant des polymères, comme un revêtement thermoscellable, en particulier un revêtement thermoscellable dans le revêtement du papier et de carton ; y compris les boîtes contenant les sandwiches, les récipients contenant des aliments congelés, les tasses, les bols, et similaires ; en particulier pour l'utilisation du revêtement thermoscellable à la fabrication de tasses en papier ou en carton.

9. Utilisation en selon la revendication 8, où l'imide cyclique contenant un polymère est un Copolymère des imides cycliques et co-monomères en vinyle.

10. Utilisation selon la revendication 8, où l'imide cyclique contenant un polymère est le produit de réaction d'une réaction d'imidisation d'un Copolymère d'anhydride cyclique et de monomères de vinyle, possédant un contenu d'anhydride cyclique (CA) de 22 et 50 % molaire, avec une solution d'ammonium (NH₃) dans un ratio de CA:NH₃ de 1.4:1 et 1:1.2 à une température élevée jusqu'à au moins 50 % du CA qui est imidisé dans l'imide.

11. L'utilisation selon la revendication 8, où le Copolymère imide cyclique est le produit de réaction d'une réaction d'imidisation d'un polystyrène d'anhydride maléique avec un contenu d'anhydride maléique (MA) de 22 et 34 % molaire en utilisant une solution d'ammonium (NH₃) dans un ratio MA:NH₃ de 1.4:1 et 1:1.2 à une température élevée jusqu'à au moins 50 % du MA qui est imidisé dans un maléimide, ledit imide cyclique contenant un polymère **caractérisé en ce qu'**il possède une granulométrie d'environ 25 - 150 nm; un contenu solide d'environ 25-45 wt%; et un pH d'environ 6,0-9.0.

12. L'utilisation selon la revendication 8, où le Copolymère imide cyclique est le produit de réaction d'une réaction d'imidisation d'un polystyrène d'anhydride maléique avec un contenu d' anhydride maléique (MA) d'environ 22 et 34 % molaire en utilisant les solutions ammonium (NH₃) solution dans un ratio MA:NH₃ d'environ 1.4:1 à 1:1.2 à une température élevée dans le produit présent non soluble dans l'eau , par exemple l'huile, l'alcane, le terpène ou la polyoléfine ou la cire, avec au moins 50 % du MA qui est imidisé dans la maléimide; le rendement élevé particulaire noyau-enveloppe ou l'enveloppe consiste en un imide cyclique contenant un polymère et le noyau des produits non solubles dans l'eau, où ladite particule noyau-enveloppe possède un contenu solide d'environ 45-65 wt%; et une granulométrie d'environ 25 - 120 nm; et un pH d'environ 6.0-9.0.

13. Utilisation selon les revendications 8 à 12, où le revêtement thermoscellable comprend un liant et/ou des agents anti adhérent.

14. Un revêtement thermoscellable comprenant ;
- Un Copolymère imide cyclique ou le dit Copolymère imide cyclique est le produit de réaction d'une réaction d'imidisation d'un polystyrène d'anhydride maléique avec un contenu d'anhydride maléique de (MA) d'environ 22 et 34 % molaire en utilisant une solution d'ammonium (H₃) dans un ratio MA:NH₃ d'environ 1.4:1 et 1:1.2 à une température élevée dans le présent produit non soluble dans l'eau, par exemple l'huile, un alcane, un terpène ou de la polyoléfine ou une cire, jusqu'à 50 % du MA qui est imidisé en maléimide; le rendement élevé particulaire noyau-enveloppe ou l'enveloppe consiste en un imide cyclique contenant un polymère et le noyau des produits non solubles dans l'eau, où lesdites particules noyau-enveloppe possédant un contenu solide d'environ 45-65 wt%; une granulométrie d'environ 25 - 120 nm; et un pH d'environ 6.0-9.0;
- Un liant choisi dans un groupe consistant en un polyacrylate, un styrène-butadiène, un polystyrène acrylique, un polyéthylène/acrylate ou un homopolymère de polyéthylène ; et
- Un agent qui adhérent qui consiste en un copolymère de styrène /acrylate avec une température de transition vitreuse ou un point de fusion d'environ 80 et 140°, de préférence avec une densité inférieure à 0,85 gramme par centimètre cube.

15. Un revêtement thermoscellable selon la revendication 14, **caractérisée en ce que** l'imide cyclique contenant un polymère soit présent entre 20 et 80 %, le liant entre 20 et 60 % et l'agent anti adhérent entre 3 et 60 %.
